# FASCICULE DE BREVET EUROPEEN

(11) **EP 1 336 059 B1**
(45) Date de publication et mention de la délivrance du brevet: **26.04.2006**
(21) Numéro de dépôt: 01993785.3
(22) Date de dépôt: 05.11.2001
(51) Int. Cl.: F16K 1/30, F16K 41/10

(54) **ROBINET AVEC SOUFFLET ETANCHE ET PRESSE-ETOUPE POUR RECIPIENT DE TRANSPORT DE FLUIDES TOXIQUES**
VENTIL MIT ABGEDICHTETEM BALG UND VERPACKUNGSKASTEN FÜR GIFTIGE FLUIDE TRANSPORTIERENDE BEHÄLTER
VALVE WITH SEALED BELLOWS AND PACKING BOX FOR CONTAINER TRANSPORTING TOXIC FLUIDS

(30) Priorité: 07.11.2000 FR 0014293
(43) Date de publication de la demande: 20.08.2003
(73) Titulaire: Arkema, 92800 Puteaux (FR)
(72) Inventeur: ESTREMS, Christian, F-38070 Saint Quentin Fallavier (FR)
(74) Mandataire: Hirsch & Associés
(86) Numéro de dépôt international: PCT/FR2001/003406
(87) Numéro de publication internationale: WO 2002/038992

(56) Documents cités:
- EP-A- 0 984 216
- DE-A- 2 831 697
- GB-A- 1 337 480
- US-A- 6 095 193

## Description

L'invention concerne un robinet étanche, et plus particulièrement un robinet étanche pour récipient de transport de fluides toxiques. Un tel robinet, correspondant au préambule de la revendication 1, est connu du document EP-A2-0 984 216.

Il est connu d'utiliser un robinet pour isoler le contenu de récipients mobiles de l'extérieur, notamment dans le domaine du transport ferroviaire. Les robinets classiques destinés aux récipients de transport de fluides toxiques, tels que le HCl ou le BF₃, se présentent sous la forme d'un corps monté sur les récipients qui assure la jonction entre ces récipients et des éléments extérieurs. Ce corps comprend une cavité qui communique avec une sortie. Le robinet ou le récipient comporte un clapet interne obturant l'entrée du corps, et assurant ainsi un premier niveau d'étanchéité du récipient au passage du fluide. Ce type de robinet comprend une tige de manoeuvre susceptible d'actionner le clapet interne pour permettre l'évacuation du fluide. Au-delà d'une certaine course, la tige exerce un effort d'ouverture sur le clapet interne de sécurité, libérant ainsi le passage du fluide contenu dans le réservoir vers un élément extérieur. Un dispositif manuel tel qu'un volant, ou un dispositif motorisé tel qu'un servomoteur, une commande hydraulique ou pneumatique, permet de déplacer cette tige selon son axe. Le dispositif de manoeuvre de la tige est placé à l'extérieur du corps de robinet. La tige s'étend donc du dispositif de manoeuvre jusqu'à l'intérieur du corps de robinet.

Pour assurer l'étanchéité du corps de robinet au niveau de la traversée de la tige, on dispose généralement une garniture de presse étoupe. Cette garniture est habituellement constituée d'un empilement de bagues en PTFE entourant la tige. Ces bagues sont comprimées selon l'axe de la tige, entre une butée du corps de robinet et un fouloir de presse étoupe, au moyens de vis. Cette compression axiale des bagues conduit à une expansion radiale de ces bagues. Grâce à cette expansion radiale, les bagues viennent au contact de la tige et assurent ainsi l'étanchéité de la cavité du corps par rapport à l'extérieur.

Cette solution présente des inconvénients. Le robinet peut présenter des fuites, tant pendant sa manipulation que pendant le transport du réservoir. Durant la manipulation du robinet, le clapet de sécurité est ouvert et laisse donc passer le fluide dans la cavité du corps. Le presse-étoupe est alors soumis à la pression du fluide, pouvant atteindre 200 bars, et doit assurer l'étanchéité de la cavité. Or le dispositif de presse-étoupe présente des fuites régulières inhérentes à cette technologie. Les personnes chargées de manipuler les récipients, contenant généralement des produits nocifs, sont exposées à ces émanations.

De plus, durant le transport, l'étanchéité du clapet interne de sécurité est imparfaite et le presse étoupe assure donc l'étanchéité du robinet. Les sollicitations mécaniques et thermiques qui sont soumises au robinet provoquent des fuites aléatoires incontrôlables au niveau du presse-étoupe. De plus, des fuites de fluides stockés généralement dans un état super critique génèrent des volumes dégagés dans l'atmosphère très importants.

Les normes antipollution ainsi que les normes de protection des personnes devenant de plus en plus rigoureuses, ces robinets exigent de fréquentes révisions pour limiter le nombre de ces fuites. De plus, les vibrations subies durant le transport accélèrent la détérioration de la garniture de presse-étoupe. Le récipient doit alors être transporté, puis immobilisé pour révision, ce qui augmente d'autant les frais de maintenance. De plus, la garniture de presse-étoupe est le plus souvent remplacée lors de ces révisions.

L'invention propose une solution à ces différents problèmes; elle propose une jonction hermétique entre la tige et le corps du robinet. Les fuites de fluide au niveau de cette jonction sont ainsi éliminées. Elle permet également de réduire sensiblement les coûts de maintenance liés à l'entretien ou au remplacement de la garniture de presse-étoupe.

L'invention concerne plus précisément un robinet comprenant un corps traversé par un organe d'actionnement mobile relativement au corps, dans lequel l'organe d'actionnement traverse un soufflet étanche comprenant au moins deux parois, dont une extrémité est solidaire du corps et l'autre extrémité est solidaire de l'organe d'actionnement.

Selon un autre mode de réalisation de l'invention, le soufflet est fait d'un alliage métallique résistant à la corrosion.

Selon encore un autre mode de réalisation de l'invention, des soudures solidarisent le soufflet respectivement au corps et à l'organe d'actionnement. Selon une variante, les soudures sont réalisées avec un métal d'apport sur le pourtour des extrémités du soufflet. Selon une autre variante, le métal d'apport comprend un alliage métallique résistant à la corrosion.

Avantageusement, un presse-étoupe est disposé entre le corps et l'organe d'actionnement.

Selon un mode de réalisation particulier, le corps comprend une première partie de corps solidarisée de préférence par au moins une soudure à une deuxième partie de corps, une extrémité du soufflet étant solidaire de la première partie de corps.

Selon un autre mode de réalisation de l'invention, l'organe d'actionnement comprend un arbre en translation par rapport au corps.

Selon encore un autre mode de réalisation de l'invention, le robinet comprend un clapet obturant un passage de fluide, le clapet étant actionné par l'organe d'actionnement. Selon une variante, le clapet comprend un ressort, une bille et un siège, le ressort appliquant la bille contre le siège.

Avantageusement, le soufflet est une pièce de révolution. Selon une variante, une section en coupe selon un plan passant par un axe du soufflet a sensiblement une forme de sinusoïde. Selon une autre variante, le soufflet comporte au moins une paroi d'une épaisseur supérieure à 0,2 mm.

L'invention concerne également un récipient comprenant un robinet selon l'invention. Selon un mode de réalisation particulier, le récipient contient un fluide toxique, de préférence du BF3 ou du HCl. Selon un autre mode de réalisation, il contient un fluide à une pression supérieure à 50 bars, de préférence supérieure à 100 bars.

D'autres caractéristiques et avantages de l'invention apparaîtront à la lecture de la description qui suit des modes de réalisation de l'invention, donnés à titre d'exemple et en référence aux dessins annexés, qui montrent :
- figure 1, une vue schématique en coupe d'un ensemble de robinetterie selon l'invention;
- figure 2, une vue détaillée en coupe d'éléments du robinet selon l'invention.
- figure 3, une vue en coupe d'un mode de réalisation particulier d'un robinet selon l'invention.

L'invention propose un robinet de sécurité pour récipient, en particulier de type mobile, comprenant un soufflet, solidaire à la fois d'un corps et d'un organe d'actionnement du robinet mobiles l'un par rapport à l'autre, et ledit soufflet assurant une étanchéité entre le corps et l'organe d'actionnement. La géométrie variable du soufflet permet d'écarter ses extrémités, respectivement solidaires du corps et de l'organe d'actionnement.

Ce soufflet est étanche dans sa constitution comme dans ses fixations respectivement à l'organe d'actionnement et au corps. Il assure ainsi qu'aucun fluide en provenance du récipient ne puisse s'échapper jusqu'à l'extérieur par un passage de l'organe d'actionnement ménagé dans le corps.

Un soufflet désigne ici tout élément comportant au moins une paroi étanche entourant une partie de la longueur d'une première pièce qui traverse une deuxième pièce, un pourtour de la paroi étant fixé de façon étanche à la première pièce et un autre pourtour de la paroi étant fixé de façon étanche à la seconde pièce autour du passage de la première pièce, dans lequel la paroi peut se déformer pour s'adapter au déplacement relatif de la première pièce par rapport à la deuxième pièce.

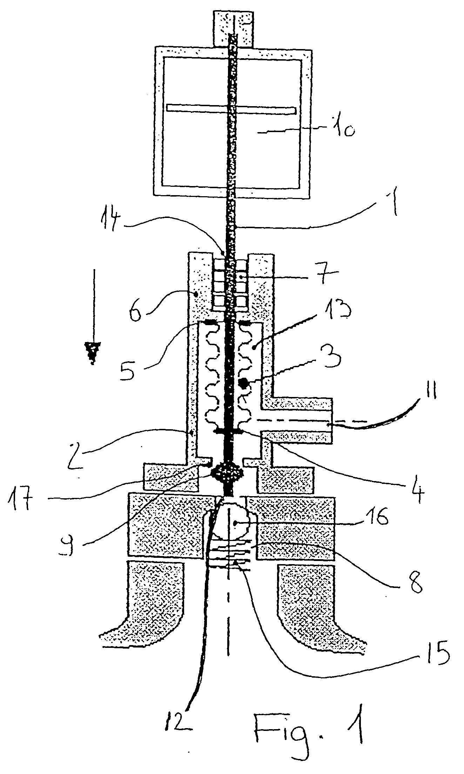

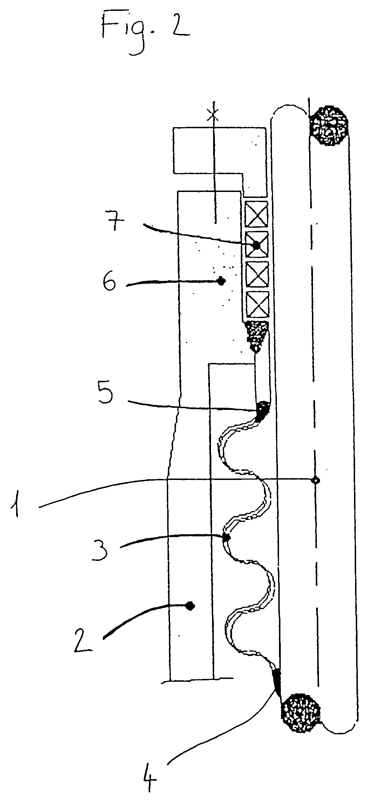

L'exemple qui suit détaille un mode de réalisation d'un robinet selon l'invention. La figure 1 est une vue schématique en coupe d'un élément de robinetterie selon l'invention. La figure montre un robinet comprenant un corps 2 dans lequel est ménagé une cavité 13. Une tige d'actionnement 1 traverse depuis l'extérieur du corps 2 un passage 14 ménagé dans une paroi du corps 2 et s'étend sensiblement sur toute la longueur de la cavité 13. Cette tige peut être translatée selon son axe par un dispositif de commande 10, extérieur au corps de robinet. Un soufflet flexible 3 est solidarisé de façon étanche à la tige 1 et au corps 2. Ce soufflet 3 entoure la tige d'actionnement 1. La tige d'actionnement 1 est ainsi entourée entre le point de solidarisation sur le corps et le point de solidarisation sur la tige. Un conduit 11 ménagé dans le corps 2 offre une communication entre la cavité 13 et une sortie du robinet. La cavité 13 du corps communique avec un passage 12 ménagé dans une pièce assemblée au corps de robinet. Ce passage 12 est en communication avec le récipient sur lequel est monté le robinet. Ce passage 12 est obturé au repos par un obturateur, qui comprend préférentiellement un clapet interne de sécurité 8, comme dans l'exemple de la figure 1.

La tige d'actionnement 1 comprend un arbre allongé. Une de ses extrémités se trouve en vis-à-vis avec le clapet de sécurité, obturant au repos le passage 12 pour le fluide contenu dans le récipient. Ce clapet comprend un ressort 15 et une sphère 16. Le ressort 15 maintient la sphère 16 en position pour obturer le passage 12. Ainsi, lorsque le dispositif de commande 10 translate la tige dans le sens de la flèche représentée à la figure 1, une extrémité de la tige vient au contact de la sphère 16 et déplace celle-ci. Le passage 12 est alors libéré. Le fluide contenu dans le récipient peut alors pénétrer dans la cavité 13 et peut être évacué par le conduit de sortie 11.

Différents types de commandes 10 peuvent être utilisées pour actionner la tige. Il est notamment connu d'utiliser des dispositifs manuels tels qu'une clé ou un volant, ou des dispositifs motorisés tels que des servomoteurs actionnés à distance et on peut aussi envisager des commandes hydrauliques, pneumatiques ou électriques pour remplir cette fonction.

Selon un mode de réalisation particulier, l'organe d'actionnement peut également comporter une excroissance 9, destinée à coopérer avec un siège 17 ménagé dans le corps du robinet. L'excroissance de l'organe d'actionnement reste en contact avec le siège 17 du corps au repos, et permet ainsi d'assurer une étanchéité supplémentaire au robinet, au niveau de sa jonction avec le réservoir.

Le soufflet 3 est solidarisé par une de ses extrémités au corps 2 à proximité du passage 14. A son autre extrémité, le soufflet est solidarisé à la tige 1.

Durant le déplacement de la tige, l'extrémité du soufflet solidaire du corps reste fixe, tandis que l'autre extrémité du soufflet suit le même déplacement que la tige dont elle est solidaire. Le déplacement de la tige vers le bas (figure 1) et par conséquent de la tige 1 écarte l'excroissance 9 du siège 17 de quelques millimètres (par exemple de 4 à 6 mm). La poursuite du mouvement (par exemple de 6 à 15 mm) pousse la bille 16 et laisse passer le fluide. Le soufflet travaille en translation en augmentant ou en diminuant de longueur en correspondance avec le déplacement de la tige. La course totale varie de préférence entre 8 et 21mm.

Les liaisons du soufflet avec le corps et la tige sont. Ainsi, l'étanchéité entre le soufflet et le corps est ici réalisée selon un contour fermé sur le corps autour de la tige par tout moyen approprié, par exemple par soudage ou collage. De même, le soufflet s'étend sur toute la circonférence de la tige, l'étanchéité est donc réalisée entre le soufflet et le corps selon un contour fermé sur la tige par des moyens appropriés tels que le soudage ou le collage. Ainsi l'étanchéité de la cavité du corps de robinet par rapport à l'extérieur est assurée entre les liaisons du soufflet au corps et à la tige.

Le soufflet représenté comprend par exemple au moins deux parois superposées concentriques, étanches et jointives, d'une épaisseur de plusieurs dixièmes de millimètres chacune (par exemple 0,2 mm), de diamètre intérieur minimal de 15 mm et de diamètre extérieur maximal de 40 mm, réalisées en alliage de Nickel-Chrome (comme le Harstelloy ® ou l'Inconel ®) ou en alliage Nickel-Cuivre (comme le Monel ®). Ces caractéristiques permettent d'assurer une étanchéité convenable à une pression de 300 bars, sur une plage de températures de -40 à +50°C. Il est aussi possible d'utiliser un soufflet comprenant plusieurs parois, dont seulement certaines assurent l'étanchéité, d'autres assurant plus particulièrement la tenue mécanique du soufflet. Ce mode de réalisation à parois multiples permet de réduire notamment de réduire l'effort d'actionnement. En effet, pour une épaisseur de l'ensemble des parois donnée, un soufflet à parois multiples présente une souplesse supérieure à un soufflet à paroi unique.

L'invention mise en oeuvre avec les caractéristiques décrites permet d'obtenir des fuites inférieures à 10⁻⁷ Pa.m³.s⁻¹ pour une pression de 200 bars dans le récipient (on peut utiliser un test d'étanchéité à l'hélium à l'aide d'un spectromètre de masse par exemple).

On choisit de préférence un soufflet de forme cylindrique comportant des bossages toriques, ou un soufflet de forme cylindrique ondulée, comme représenté à la figure 1. Un tel soufflet, qu'il ait une ou plusieurs parois, peut être réalisé de façon connue par hydroformage. Il est également possible d'utiliser un soufflet tronconique comportant des bossages toriques. Plus généralement, le soufflet peut consister en une paroi de révolution, dont la génératrice est une ligne ondulée. De telles formes permettent de diminuer la raideur axiale du soufflet par rapport à un simple cylindre ou un troncône régulier de même épaisseur. On peut ainsi déformer le soufflet élastiquement en déplaçant la tige d'actionnement. On s'aperçoit nettement que des ondulations le long de l'axe du soufflet, en diminuent la raideur, puisque des efforts de compression transmis aux extrémités du soufflet, s'appliquent transversalement aux ondulations de celui-ci.

Le soufflet est préférentiellement disposé à l'intérieur de la cavité du corps du robinet. Mais on peut également réaliser un robinet selon l'invention comportant un soufflet extérieur au corps, notamment pour faciliter d'éventuels contrôles d'étanchéité.

Divers modes de réalisation particuliers du robinet selon l'invention sont possibles, apportant des avantages supplémentaires. Il apparaîtra ainsi utile à l'homme de l'art de choisir convenablement des matériaux constitutifs du soufflet résistant à la corrosion électrochimique. Le soufflet sera donc avantageusement réalisé dans un matériau résistant à la corrosion induite par le fluide transporté ou par les produits de décomposition générés par l'humidité environnante. L'assemblage du soufflet au corps et à la tige est de préférence réalisé par des soudures 4 et 5 lorsqu'on utilise un soufflet en métal ou en alliage métallique. Les soudures sont de préférence réalisées avec un métal d'apport. On peut réaliser un cordon de soudure 5 pour assembler une extrémité du soufflet au corps du robinet, ainsi qu'un second cordon de soudure 4 pour assembler l'autre extrémité du soufflet à la tige. Ces soudures pourront avantageusement assurer l'étanchéité au niveau de la jonction entre le corps et le soufflet d'une part, et au niveau de la jonction entre la tige et le soufflet d'autre part. Pour éviter la corrosion des zones de soudage, il est préférable d'utiliser comme métal d'apport, soit le même métal que pour le soufflet, soit un alliage de Cr, Ni, Cu, Mo ou Ti.

Le corps peut être réalisé en matériaux tels que l'acier au carbone, l'acier inoxydable ou dans un alliage à base de Nickel. La tige peut être réalisée dans un matériau résistant à la corrosion. Elle peut ainsi être réalisée dans un acier inoxydable ou dans un alliage de Nickel.

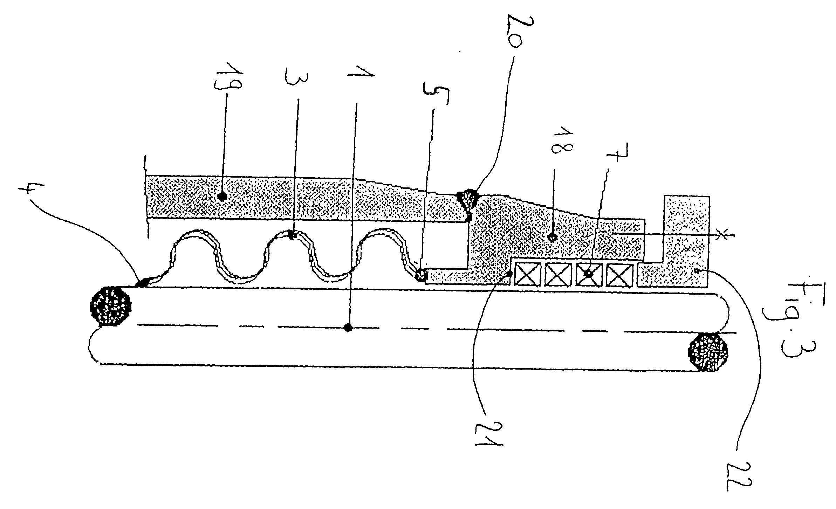

Pour faciliter l'assemblage, il est possible de prévoir un corps de robinet en deux parties. Les figures 2 et 3 illustrent 2 modes de réalisation d'un tel corps en deux parties. La soudure réalisée entre le soufflet et le corps peut ainsi être réalisée sur une première partie intermédiaire du corps 18, fait de préférence d'un matériau identique ou similaire à celui du soufflet. Le corps comprend ainsi une première partie 18, pouvant comprendre le cas échéant -cf figure 3- une boîte à garniture destinée à recevoir une garniture de presse-étoupe 7 qui sera décrite plus loin. La première partie 18 est soudée de façon étanche à une deuxième partie 19 du corps de robinet. De la sorte, il est possible de fabriquer le robinet en soudant d'abord le soufflet à la première partie du corps, puis en soudant le soufflet à l'organe d'actionnement et enfin en soudant les première et deuxième parties 18 et 19 du corps.

Il est également possible d'utiliser une pièce intermédiaire, par exemple en forme de rondelle, pour la liaison tige-soufflet, pour faciliter l'assemblage. On peut ainsi d'abord souder la rondelle sur le soufflet, puis souder la rondelle sur la tige.

Selon un mode de réalisation particulier, représenté aux figures 1 à 3, on peut également disposer un joint en complément du soufflet. Ainsi, une garniture de presse-étoupe 7 peut entourer la tige d'actionnement au niveau de son passage 14 dans le corps de robinet. On peut ainsi disposer les garnitures de presse-étoupe 7 en butée contre un épaulement 21 disposé au fond de la boîte. La garniture peut ensuite être comprimée entre l'épaulement et un fouloir 22 que l'on vient visser dans la boîte ou dans le corps du robinet. La garniture de presse étoupe 7 est ainsi comprimée axialement, et s'étend donc radialement pour venir au contact de la tige. En ajoutant un dispositif d'étanchéité supplémentaire, on réduit les risques de fuites lors d'une très improbable défaillance du soufflet.

L'invention concerne également un réservoir sur lequel est monté un robinet tel que décrit précédemment. Ce réservoir, de forme sphérique ou cylindrique, comporte généralement une ouverture boulonnée sur laquelle est disposé ledit robinet. Le robinet peut être assemblé au réservoir par tout moyen adéquat. Il peut ainsi être assemblé par vissage sur l'ouverture précitée.

On peut ainsi utiliser un tel réservoir sous la forme d'un réservoir mobile pour le transport de fluides toxiques sous pression, notamment pour le transport de fluides tels que du BF3 ou du HCl.

## Revendications

1. Robinet comprenant un corps (2) traversé par un organe d'actionnement (1) mobile relativement au corps (2), dans lequel l'organe d'actionnement traverse un soufflet étanche (3) **caractérisé en ce que** celui-ci comprend au moins deux parois, une de ses extrémités étant solidaire du corps et l'autre extrémité solidaire de l'organe d'actionnement.

2. Robinet selon la revendication 1, **caractérisé en ce que** le soufflet est fait d'un alliage métallique résistant à la corrosion.

3. Robinet selon l'une des revendications 1 ou 2, **caractérisé en ce que** des soudures (4, 5) solidarisent le soufflet respectivement au corps et à l'organe d'actionnement.

4. Robinet selon la revendication 3, **caractérisé en ce que** les soudures (4, 5) sont réalisées avec un métal d'apport sur le pourtour des extrémités du soufflet.

5. Robinet selon la revendication 4, **caractérisé en ce que** le métal d'apport comprend un alliage métallique résistant à la corrosion.

6. Robinet selon l'une des revendications 1 à 5, **caractérisé en ce qu'**un presse-étoupe (7) est disposé entre le corps et l'organe d'actionnement.

7. Robinet selon l'une des revendications 1 à 6, **caractérisé en ce que** le corps comprend une première partie (18) de corps solidarisée de préférence par au moins une soudure à une deuxième partie (19) de corps, une extrémité du soufflet (3) étant solidaire de la première partie (18) de corps.

8. Robinet selon l'une des revendications 1 à 7, **caractérisé en ce** l'organe d'actionnement comprend un arbre en translation par rapport au corps.

9. Robinet selon l'une des revendications 1 à 8, **caractérisé en ce que** il comprend un clapet (8) obturant un passage de fluide (12), le clapet (8) étant actionné par l'organe d'actionnement.

10. Robinet selon la revendication 9 **caractérisé en ce que** le clapet (8) comprend un ressort (15), une bille (16) et un siège, le ressort appliquant la bille contre le siège.

11. Robinet selon l'une des revendications 1 à 10, **caractérisé en ce que** le soufflet est une pièce de révolution.

12. Robinet selon l'une des revendications 1 à 11, **caractérisé en ce que** une section en coupe selon un plan passant par un axe du soufflet a sensiblement une forme de sinusoïde.

13. Robinet selon l'une des revendications 1 à 12, **caractérisé en ce que** le soufflet comporte au moins une paroi d'une épaisseur supérieure à 0,2 mm.

14. Récipient comprenant un robinet selon l'une quelconque des revendications précédentes.

15. Récipient selon là revendication 14, **caractérisé en ce qu'**il contient un fluide toxique, de préférence du BF3 ou du HCl.

16. Récipient selon la revendication 15, **caractérisé en ce que** il contient un fluide à une pression supérieure à 50 bars, de préférence supérieure à 100 bars.

## Patentansprüche

1. Ventil, umfassend einen Körper (2), der von einem Betätigungsorgan (1) durchsetzt wird, welches gegenüber dem Körper (2) beweglich ist, in welchem das Betätigungsorgan einen dichten Balgen (3) durchsetzt, **dadurch gekennzeichnet, daß** der Balgen mindestens zwei Wände aufweist, und daß eines seiner Enden mit dem Körper verbunden ist und das andere Ende mit dem Betätigungsorgan verbunden ist.

2. Ventil nach Anspruch 1, **dadurch gekennzeichnet, daß** der Balgen aus einer korrosionsbeständigen Metalllegierung besteht.

3. Ventil nach Anspruch 1 oder 2, **dadurch gekennzeichnet, daß** Schweißnähte (4, 5) den Balgen mit dem Körper bzw. mit dem Betätigungsorgan verbinden.

4. Ventil nach Anspruch 3, **dadurch gekennzeichnet, daß** die Schweißnähte (4, 5) mit einem Füllmetall entlang dem Umfang der Enden des Balgen ausgebildet sind.

5. Ventil nach Anspruch 4, **dadurch gekennzeichnet, daß** das Füllmaterial eine korrosionsbeständige Metalllegierung aufweist.

6. Ventil nach einem der Ansprüche 1 bis 5, **dadurch gekennzeichnet, daß** zwischen dem Körper und dem Betätigungsorgan eine Stopfbuchse (7) angeordnet ist.

7. Ventil nach einem der Ansprüche 1 bis 6, **dadurch gekennzeichnet, daß** der Körper einen ersten Körperteil (18) aufweist, der vorzugsweise mittels Schweißnaht an einem zweiten Teil (19) des Körpers befestigt ist, wobei ein Ende des Balgens (3) mit dem ersten Teil (18) des Körpers verbunden ist.

8. Ventil nach einem der Ansprüche 1 bis 7, **dadurch gekennzeichnet, daß** das Betätigungsorgan eine gegenüber dem Körper translatonisch bewegbare Welle aufweist.

9. Ventil nach einem der Ansprüche 1 bis 8, **dadurch gekennzeichnet, daß** es ein Drosselelement (8) aufweist, welches einen Fluidkanal (12) umgibt, wobei das Drosselelement (8) durch das Betätigungsorgan betätigt wird.

10. Ventil nach Anspruch 9, **dadurch gekennzeichnet, daß** das Drosselelement (8) eine Feder (15), eine Kugel (16) und einen Kugelsitz aufweist, wobei die Feder die Kugel gegen den Kugelsitz drückt.

11. Ventil nach einem der Ansprüche 1 bis 10, **dadurch gekennzeichnet, daß** der Balgen ein Drehteil ist.

12. Ventil nach einem der Ansprüche 1 bis 11, **dadurch gekennzeichnet, daß** ein Querschnitt entlang einer durch eine Achse des Balgen verlaufenden Ebene im wesentlichen sinusförmig ist.

13. Ventil nach einem der Ansprüche 1 bis 12, **dadurch gekennzeichnet, daß** der Balgen mindestens eine Wand mit einer Dicke von mehr als 0,2 mm aufweist.

14. Behälter, umfassend ein Ventil nach einem der vorhergehenden Ansprüche.

15. Behälter nach Anspruch 14, **dadurch gekennzeichnet, daß** er ein toxisches Fluid, vorzugsweise BF3 oder HCl enthält.

16. Behälter nach Anspruch 15, **dadurch gekennzeichnet, daß** er ein Fluid enthält, welches unter einem Druck von mehr als 50 bar, vorzugsweise mehr als 100 bar steht.

## Claims

1. A valve comprising a body (2) through which an actuating member (1) able to move relative to the body (2) passes, in which the actuating member passes through a sealed bellows (3), **characterized in that** the latter comprises at least two walls, one of its ends being secured to the body and the other end being secured to the actuating member.

2. The valve as claimed in claim 1, **characterized in that** the bellows is made from a corrosion-resistant metal alloy.

3. The valve as claimed in either of claims 1 and 2, **characterized in that** welds (4, 5) secure the bellows to the body and to the actuating member, respectively.

4. The valve as claimed in claim 3, **characterized in that** the welds (4, 5) are made with a filler metal around the perimeter of the ends of the bellows.

5. The valve as claimed in claim 4, **characterized in that** the filler metal comprises a corrosion-resistant metal alloy.

6. The valve as claimed in one of claims 1 to 5, **characterized in that** a stuffing box (7) is placed between the body and the actuating member.

7. The valve as claimed in one of claims 1 to 6, **characterized in that** the body comprises a first body part (18) preferably secured by means of at least one weld to a second body part (19), one end of the bellows (3) being secured to the first body part (18).

8. The valve as claimed in one of claims 1 to 7, **characterized in that** the actuating member comprises a shaft moving in translation with respect to the body.

9. The valve as claimed in one of claims 1 to 8, **characterized in that** it comprises a valve element (8) closing off a fluid passage (12), the valve element (8) being actuated by the actuating member.

10. The valve as claimed in claim 9, **characterized in that** the valve element (8) comprises a spring (15), a ball (16) and a seat, the spring pressing the ball against the seat.

11. The valve as claimed in one of claims 1 to 10, **characterized in that** the bellows is an axisymmetric part.

12. The valve as claimed in one of claims 1 to 11, **characterized in that** a cross section along a plane passing through an axis of the bellows is substantially sinusoidal.

13. The valve as claimed in one of claims 1 to 12, **characterized in that** the bellows comprises at least one wall with a thickness greater than 0.2 mm.

14. A container comprising the valve as claimed in any one of the preceding claims.

15. The container as claimed in claim 14, **characterized in that** it contains a toxic fluid, preferably BF₃ or HCl.

16. The container as claimed in claim 15, **characterized in that** it contains a fluid at a pressure greater than 50 bar, preferably greater than 100 bar.
